# FASCICULE DE BREVET EUROPEEN

(11) **EP 2 993 367 B1**
(45) Date de publication et mention de la délivrance du brevet: **31.05.2017**
(21) Numéro de dépôt: 15179839.4
(22) Date de dépôt: 05.08.2015
(51) Int. Cl.: F16D 21/06, F16D 13/70

(54) **MECANISME A DOUBLE EMBRAYAGE HUMIDE POUR UN SYSTEME DE TRANSMISSION**
MECHANISMUS MIT DOPPELNASSKUPPLUNG FÜR EIN ÜBERTRAGUNGSSYSTEM
DUAL WET CLUTCH MECHANISM FOR A TRANSMISSION SYSTEM

(30) Priorité: 03.09.2014 FR 1458244
(43) Date de publication de la demande: 09.03.2016
(73) Titulaire: Valeo Embrayages, 80009 Amiens Cedex 2 (FR)
(72) Inventeur: ARHAB, Rabah, 95350 ST BRICE SOUS FORET (FR); RIBOT, Herve, 80200 PERONNE (FR); CAUMARTIN, Laurent, 80600 BEAUQUESNE (FR); VERHOOG, Roel, 60190 GOURNAY SUR ARONDE (FR)
(74) Mandataire: Cardon, Nicolas

(56) Documents cités:
- DE-A1-102012 008 779
- DE-B3-102008 048 801
- US-A1- 2013 199 883

## Description

La présente invention concerne un mécanisme à double embrayage humide pour un système de transmission.

La présente invention concerne plus particulièrement un mécanisme à double embrayage humide pour un système de transmission, notamment de véhicule automobile, comportant autour d'un axe de rotation au moins un premier embrayage et un deuxième embrayage respectivement de type multidisques, le premier embrayage comportant au moins un premier piston et le deuxième embrayage comportant au moins un deuxième piston, lesdits premier et deuxième pistons étant déplacés axialement en sens opposé pour venir, en position embrayée, serrer un ensemble multidisques contre des moyens de réaction.

On connaît de l'art antérieur un tel mécanisme à double embrayage humide pour un système de transmission, notamment de véhicule automobile.

On connaît notamment le document DE10 2008 048 801 B3 qui divulgue un mécanisme à double embrayage tel que défini dans l'introduction de la revendication 1. On distingue notamment deux conceptions de mécanisme à double embrayage, d'une part les mécanismes à double embrayage dits « à sec » et, d'autre part, les mécanismes à double embrayage dits « humide ».

La présente invention concerne plus particulièrement un double embrayage humide (ou « *Double Wet Clutch* » en anglais).

Dans le cas d'un mécanisme à double embrayage humide, les embrayages sont généralement de type multidisques et les garnitures de friction des disques de l'ensemble multidisques sont maintenues en permanence humides par de l'huile.

Le système de transmission comportant ledit mécanisme à double embrayage humide comporte généralement au moins une coquille d'entrée qui est liée en rotation à un arbre menant et à un voile d'entrainement pour lier en rotation ladite coquille d'entrée audit mécanisme, lequel mécanisme est commandé pour accoupler sélectivement ledit arbre menant à un premier arbre mené et à un deuxième arbre mené.

Pour ce faire, le mécanisme à double embrayage comporte un premier embrayage qui, agencé par exemple côté boîte de vitesses, sert à la fois au démarrage et à l'engagement des rapports impairs et un deuxième embrayage qui, agencé par exemple côté moteur, prend en charge les rapports pairs et la marche arrière.

Le premier embrayage et le deuxième embrayage transmettent alternativement la puissance d'entrée (le couple et la vitesse) de l'arbre menant, qui est lié en rotation au moteur, à l'un des deux arbres menés qui sont liés à la boîte de vitesses et généralement coaxiaux.

Pour une sécurité améliorée, le premier embrayage et le deuxième embrayage du mécanisme sont respectivement débrayés au repos, c'est à dire « normalement ouvert », et sont fermés activement par des moyens d'actionnement hydraulique d'un dispositif de commande qui est associé au mécanisme à double embrayage.

L'intérêt croissant porté aux mécanismes à double embrayage est notamment lié au confort et aux performances obtenues, ainsi qu'à la continuité de l'accélération lors des changements de rapport, sans rupture de couple.

Les systèmes de transmission comportant un tel mécanisme à double embrayage apportent aussi, par comparaison notamment avec une boîte de vitesse automatique traditionnelle, un gain de consommation et des émissions de CO₂.

Pour certaines applications, le premier embrayage et le deuxième embrayage du mécanisme à double embrayage humide sont axialement juxtaposés, agencés l'un à côté de l'autre, et les pistons de chacun desdits premier et deuxième embrayages sont déplacés axialement en sens opposé pour venir en position embrayée.

Les moyens de réaction du premier embrayage et du deuxième embrayage sont alors interposés axialement entre l'ensemble multidisques du premier embrayage et l'ensemble multidisques du deuxième embrayage.

Un tel agencement central des moyens de réaction communs aux premier et deuxième embrayages, situés axialement de part et d'autre, n'est toutefois pas sans poser problème.

En effet, il existe des risques d'interaction entre les premier et deuxième embrayages lorsque les moyens de réaction, sollicités axialement par le piston de l'un des embrayages en position embrayée, viennent appliquer un effort axial sur l'ensemble multidisques de l'autre des embrayages, notamment sur le flasque adjacent.

Or, l'engagement vers la position embrayée de l'un des embrayages du mécanisme alors que l'autre des embrayages occupe déjà la position embrayée est susceptible de provoquer des problèmes pouvant aller jusqu'à des dommages dans le mécanisme à double embrayage et plus généralement dans le système de transmission.

Par conséquent, un tel mécanisme à double embrayage humide pour un système de transmission ne donne pas entière satisfaction, notamment en terme de fiabilité de fonctionnement.

Le but de la présente invention est notamment de proposer un mécanisme à double embrayage humide pour un système de transmission permettant de résoudre au moins une partie des problèmes de l'art antérieur, en particulier la fiabilité.

Dans ce but, l'invention propose un mécanisme à double embrayage humide du type décrit dans la revendication 1. Avantageusement, le jeu axial entre les éléments de réaction de chacun des embrayages du mécanisme permet d'éviter tout risque d'interaction entre eux, chacun pouvant se déplacer axialement sans entrer en contact avec l'autre.

Selon d'autres caractéristiques de l'invention :
- le premier élément de réaction et le deuxième élément de réaction comportent au moins un bossage d'appui qui coopère axialement avec l'un des flasques de l'ensemble multidisques de celui desdits embrayages auquel ledit élément de réaction est associé ;
- ledit au moins bossage d'appui du premier élément de réaction et ledit au moins un bossage axial d'appui du deuxième élément de réaction sont situés radialement sur un même rayon par rapport à l'axe ;
- le premier élément de réaction et le deuxième élément de réaction sont circonférentiellement continu de manière à former un disque ;
- le premier élément de réaction et le deuxième élément de réaction comportent au moins une partie radiale externe circonférentiellement discontinue formée d'une pluralité de bras de réaction ;
- le premier élément de réaction et le deuxième élément de réaction comportent des moyens raidisseur pour raidir axialement lesdits premier et deuxième éléments de réaction ;
- le premier élément de réaction et le deuxième élément de réaction, réalisés en une seule pièce ou en deux au moins pièces distinctes, sont liés en rotation à au moins un moyeu ;
- le premier élément de réaction et le deuxième élément de réaction sont liés en rotation audit au moins un moyeu par soudage ou par rivetage ;
- ledit au moins un moyeu est un moyeu commun au premier embrayage et au deuxième embrayage ;
- ledit au moins un moyeu est réalisé en deux parties, respectivement un premier moyeu associé au premier embrayage et un deuxième moyeu associé au deuxième embrayage ;
- le premier élément de réaction est réalisé en une seule pièce avec ledit premier moyeu du premier embrayage et le deuxième élément de réaction est réalisé en une seule pièce avec ledit deuxième moyeu du deuxième embrayage ;
- le mécanisme comporte des moyens de liaison pour lier axialement sans jeu au moins le premier moyeu et le deuxième moyeu ;
- lesdits moyens de liaison sont formés par des rivets.

L'invention a également pour objet un mécanisme à double embrayage humide pour un système de transmission, notamment de véhicule automobile, comportant autour d'un axe de rotation au moins un premier embrayage et un deuxième embrayage respectivement de type multidisques, le premier embrayage comportant au moins un premier piston et le deuxième embrayage comportant au moins un deuxième piston lesdits premier et deuxième pistons étant déplacés axialement en sens opposé pour venir, en position embrayée, serrer un ensemble multidisques contre des moyens de réaction qui sont interposés axialement entre l'ensemble multidisques de chacun desdits premier et deuxième embrayages, lesdits moyens de réaction comportent au moins un premier élément de réaction et un deuxième élément de réaction qui, respectivement associés au premier embrayage et au deuxième embrayage, sont séparés axialement l'un de l'autre par un jeu,
le premier élément de réaction et le deuxième élément de réaction, réalisés en une seule pièce ou en deux au moins pièces distinctes, sont liés en rotation à au moins un moyeu réalisé en deux parties, respectivement un premier moyeu associé au premier embrayage et un deuxième moyeu associé au deuxième embrayage.

D'autres caractéristiques et avantages de l'invention apparaîtront au cours de la lecture de la description détaillée qui va suivre pour la compréhension de laquelle on se reportera aux dessins annexés parmi lesquels :

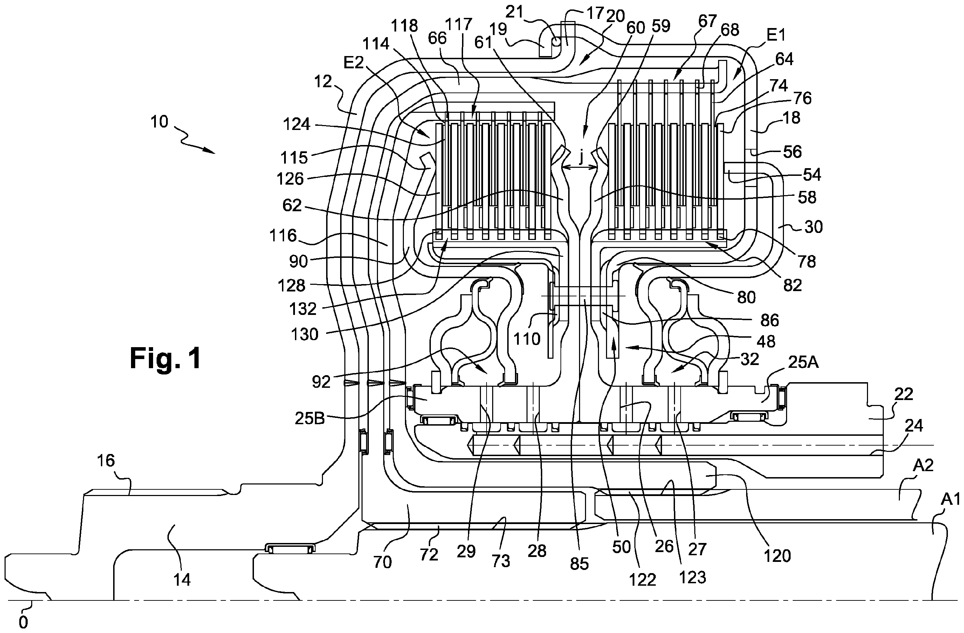

- la figure 1 est une demi-vue en coupe axiale qui représente un système de transmission comportant un mécanisme à double embrayage humide et qui illustre un mode de réalisation des moyens de réaction selon l'invention ;

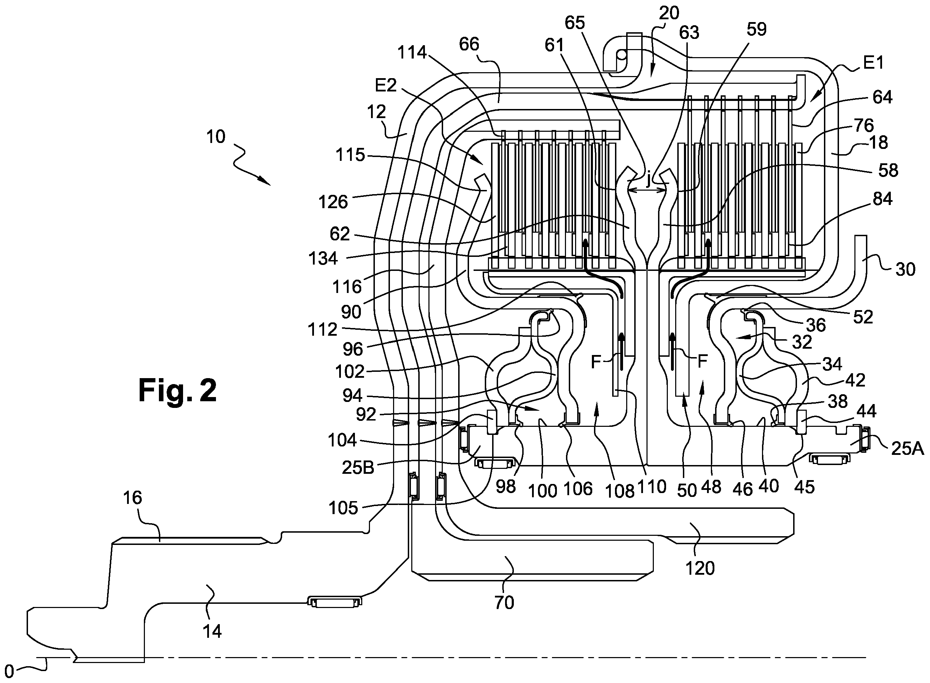

- la figure 2 est une demi-vue en coupe axiale qui, décalée angulairement par rapport à celle de la figure 1, représente le système de transmission et qui illustre notamment l'un des passages radiaux de circulation d'huile existant entre deux rivets consécutifs formant les moyens de liaison liant axialement sans jeu au moins les premier et deuxième moyeux liés aux moyens de réaction ;

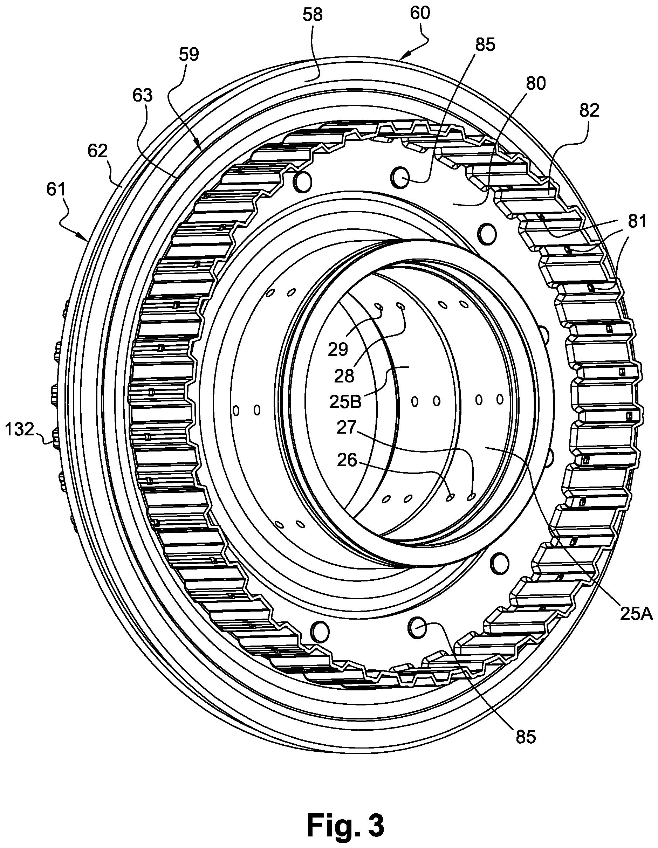

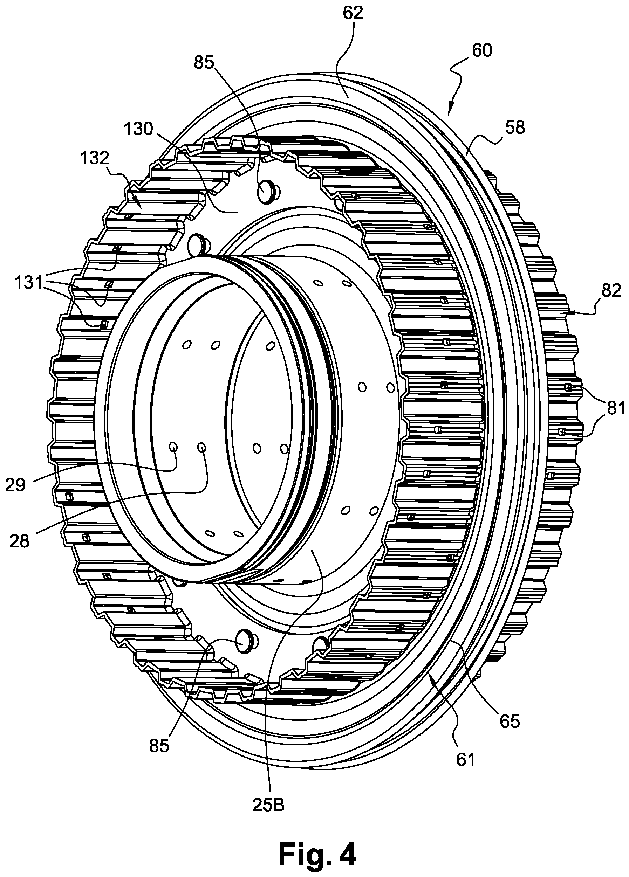

- les figures 3 et 4 sont des vues en perspective qui représentent partiellement le mécanisme et qui illustrent respectivement le premier élément de réaction associé au premier embrayage et le deuxième élément de réaction associé au deuxième embrayage ;

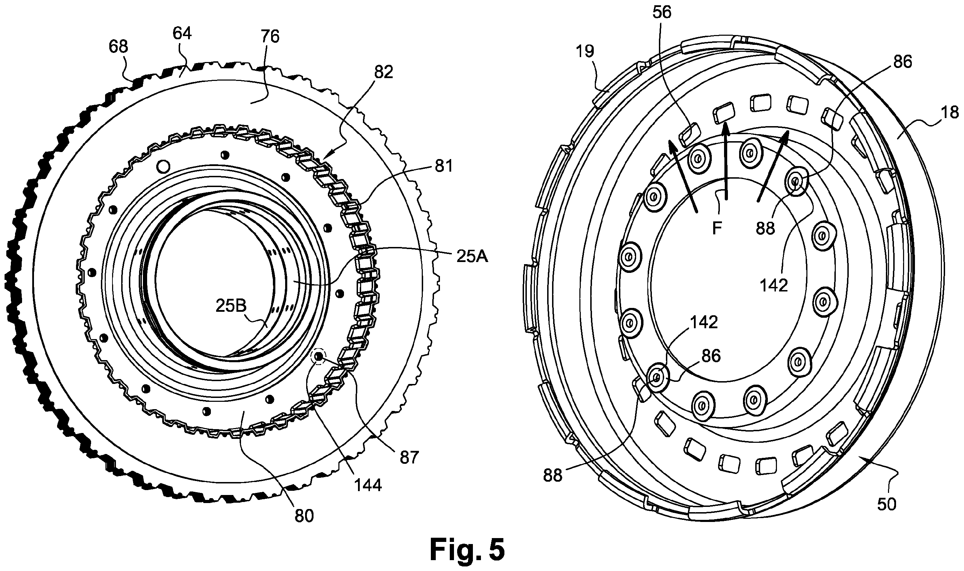

- la figure 5 est une vue en perspective qui représente respectivement le porte-disques intérieur du premier embrayage et le piston d'équilibrage du premier embrayage formé par le voile d'entraînement et qui illustre les passages radiaux de circulation d'huile existant entre la face radiale dudit porte-disques et la face radiale du piston d'équilibrage, dans les zones non embouties de la face ;

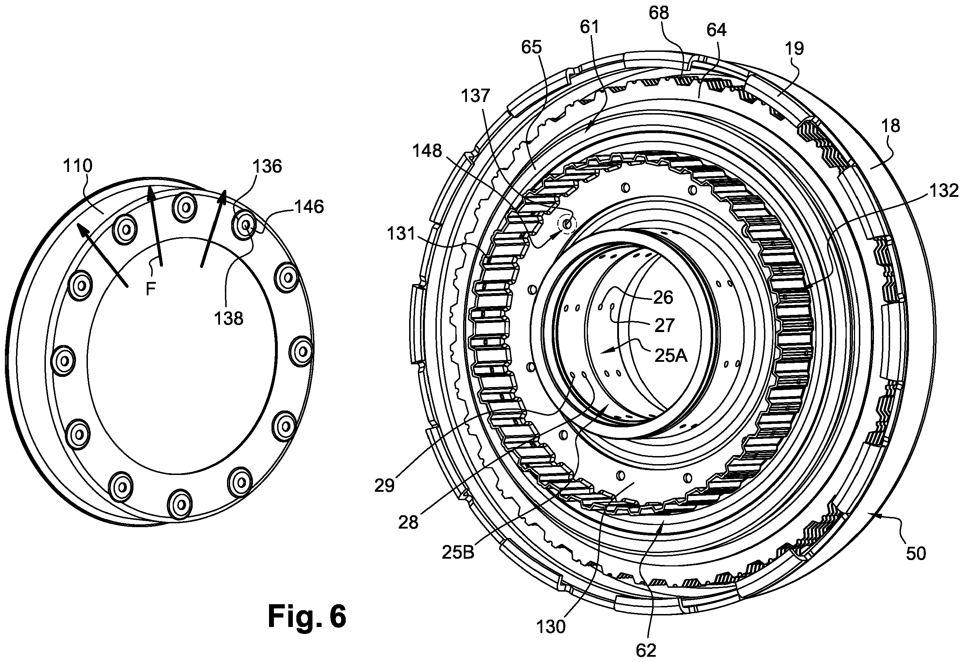

- la figure 6 est une vue en perspective qui représente respectivement le porte-disques intérieur du deuxième embrayage et le piston d'équilibrage du deuxième embrayage et qui illustre, comme la figure 5, les passages radiaux de circulation d'huile existant entre la face radiale dudit porte-disques et la face radiale du piston d'équilibrage formé par le voile, dans les zones non embouties de sa face ;

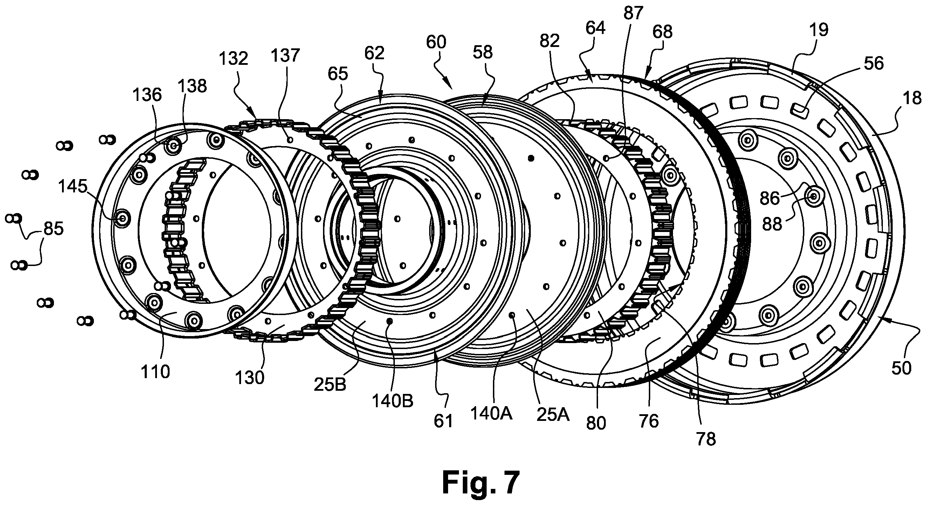

- la figure 7 est une vue en perspective qui représente en éclaté une partie du mécanisme et qui illustre plus particulièrement au centre le premier élément de réaction et la deuxième élément de réaction formés par un disque et réalisés en une seule pièce ou soudées avec le premier moyeu et le deuxième moyeu.

Dans la suite de la description et les revendications, on utilisera à titre non limitatif et afin d'en faciliter la compréhension, les termes « avant » ou « arrière » selon la direction considérée par rapport à une orientation axiale déterminée par l'axe O de rotation et les termes « intérieur / interne » ou « extérieur / externe » par rapport à la distance avec l'axe O suivant une orientation radiale, orthogonale à ladite orientation axiale.

On a représenté sur les figures 1 et 2, un exemple de réalisation d'un système 10 de transmission, notamment pour un véhicule automobile, présentant un axe O de rotation.

Le système 10 de transmission comporte autour de l'axe O au moins un élément d'entrée qui est lié en rotation à un arbre menant (non représenté).

De préférence, l'élément d'entrée du système 10 comporte au moins une coquille 12 d'entrée qui est liée en rotation à un moyeu 14 d'entrée.

La coquille 12 d'entrée, présentant globalement une forme en « L », comporte une partie d'orientation radiale reliée par un coude à une partie d'orientation axiale.

Le moyeu 14 comporte une partie d'orientation radiale et une partie d'orientation axiale, le moyeu 14 étant agencé radialement à l'intérieur par rapport à la coquille 12.

La partie d'orientation axiale du moyeu 14 située à l'intérieur de la partie radiale, s'étend axialement vers l'arrière dans une direction correspondant à celle du moteur.

Le moyeu 14 comporte des cannelures 16, ménagées dans la surface cylindrique externe de la partie axiale, pour la liaison en rotation avec l'arbre menant de l'élément d'entrée formé par au moins la coquille 12 et le moyeu 14.

L'extrémité intérieure de la partie radiale de la coquille 12 et celle extérieure de la partie radiale du moyeu 14 d'entrée sont solidaires, de préférence fixées ensemble par soudage.

En variante, l'extrémité intérieure de la partie radiale de la coquille 12 d'entrée et l'extrémité extérieure de la partie radiale du moyeu 14 d'entrée sont fixées ensemble par rivetage.

Le moyeu 14 d'entrée est par exemple lié en rotation par l'intermédiaire des cannelures 16 à la sortie d'un dispositif d'amortissement ou amortisseur (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

La coquille 12 d'entrée est entraînée en rotation par le moteur par l'intermédiaire du moyeu 14 d'entrée.

La coquille 12 d'entrée est liée en rotation à un voile 18 d'entrainement, lequel voile 18 d'entraînement lie en rotation ladite coquille 12 d'entrée à un mécanisme 20 à double embrayage humide.

La coquille 12 d'entrée et le voile 18 d'entraînement sont liés en rotation par coopération de formes.

La coquille 12 d'entrée comporte, à son extrémité radiale externe d'orientation axiale, des pattes 17 qui s'étendent radialement vers l'extérieur et qui s'interpénètrent avec des pattes 19 que comporte, à son extrémité radiale externe d'orientation axiale, le voile 18 d'entraînement.

Les pattes 19 du voile 18 d'entraînement s'étendent radialement vers l'intérieur et sont décalées angulairement par rapport aux pattes 17 pour, circonférentiellement, s'insérer axialement entre deux pattes 17 consécutives de la coquille 12 d'entrée.

Un jonc 21 annulaire est logé axialement entre les pattes 17 de la coquille 12 d'entrée et les pattes 19 du voile 18 d'entraînement.

Le mécanisme 20 à double embrayage humide est commandé pour accoupler sélectivement ledit arbre menant à un premier arbre A1 mené et à un deuxième A2 arbre mené.

De préférence, le premier arbre A1 mené et le deuxième A2 arbre mené sont coaxiaux.

Le mécanisme 20 à double embrayage humide comporte au moins un premier embrayage E1 et un deuxième embrayage E2, qui sont respectivement de type multidisques.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 20 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier embrayage E1 et deuxième embrayage E2 sont inversés.

Le premier embrayage E1 est par exemple agencé axialement à l'avant du côté de la boîte de vitesses et le deuxième embrayage E2 est par exemple agencé axialement à l'arrière du côté moteur, du moyeu 14 d'entrée.

Le premier embrayage E1 et le deuxième embrayage E2 transmettent alternativement la puissance d'entrée (le couple et la vitesse) de l'arbre menant, que reçoit la coquille 12 d'entrée du système 10, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par un dispositif de commande (non représenté) pour passer de l'état ouvert à l'état fermé.

Le mécanisme 20 à double embrayage humide est commandé hydrauliquement par l'intermédiaire d'un fluide sous pression, généralement de l'huile.

Pour commander sélectivement le changement d'état du premier embrayage E1 et du deuxième embrayage E2 du mécanisme 20 du système 10 de transmission, le dispositif de commande comporte au moins un arbre 22 de commande comportant des canaux 24 d'alimentation en huile, par exemple au nombre de quatre tel que représenté sur la figure 1.

Le mécanisme 20 comporte au moins un moyeu comportant des perçages radiaux qui sont chacun reliés à l'un des canaux 24 d'alimentation en huile.

De préférence, ledit au moins un moyeu est réalisé en deux parties, un premier moyeu 25A et un deuxième moyeu 25B respectivement associés au premier embrayage E1 et au deuxième embrayage E2.

Le premier moyeu 25A comporte deux perçages 26 et 27 qui sont associés à la commande du premier embrayage E1 situé axialement à l'avant et le deuxième moyeu 25B comporte également deux perçages 28 et 29 qui sont associés à la commande du deuxième embrayage E2 situé axialement à l'arrière.

En variante non représentée, ledit au moins un moyeu est un moyeu commun au premier embrayage E1 et au deuxième embrayage E2 qui est réalisé en une seule pièce, monobloc.

Le premier embrayage E1 de type multidisques comporte un piston 30 qui est mobile axialement, ici de l'avant vers l'arrière, entre une position débrayée et une position embrayée qui correspondent respectivement aux états ouvert et fermé du premier embrayage E1.

Tel que représenté sur les figures 1 et 2, le piston 30 est commandé en déplacement au moyen d'une chambre 32 de commande délimitée axialement par une face avant d'une partie radiale interne du piston 30 et par la face radiale arrière d'une pièce 34 de fermeture.

La pièce 34 de fermeture porte à son extrémité radiale externe des moyens 36 d'étanchéité qui coopèrent avec une face interne d'une partie axiale du piston 30 et à son extrémité radiale interne des moyens 38 d'étanchéité qui coopèrent avec une surface 40 axiale externe du premier moyeu 25A.

De préférence, la pièce 34 de fermeture est associée à une pièce 42 d'appui qui est bloquée axialement par un anneau 44 d'arrêt monté dans une gorge 45 du premier moyeu 25A.

Avantageusement, les efforts axiaux liés à la mise en pression de la chambre 32 de commande sont repris par la pièce 42 d'appui et non par la pièce 34 de fermeture pourtant les moyens 36 et 38 d'étanchéité.

Le piston 30 comporte à son extrémité radiale interne des moyens 46 d'étanchéité qui coopèrent avec la surface 40 axiale externe du premier moyeu 25A, lorsque le piston 30 est déplacé axialement entre les positions débrayée et embrayée par la mise en pression de la chambre 32 de commande.

La pièce 34 de fermeture de la chambre 32 de commande du piston 30 comporte, entre ses deux extrémités radiales portant les moyens d'étanchéité 36 et 38, une portion convexe qui coopère avec la face radiale avant du piston 30 axialement en vis-à-vis.

Le volume de la chambre 32 de commande comporte une partie extérieure et une partie intérieure, située radialement de part et d'autre de ladite portion convexe de la pièce 34 de fermeture.

La chambre 32 de commande est alimentée en huile par l'intermédiaire du perçage 27 qui traverse radialement le premier moyeu 25A, le perçage 27 mettant en communication ladite chambre 32 de commande avec l'un des canaux 24 d'alimentation en huile.

La chambre 32 de commande du piston 30 du premier embrayage E1 est associée à une chambre 48 d'équilibrage délimitée au moins par un piston 50 d'équilibrage.

Avantageusement, le voile 18 d'entraînement constitue le piston 50 d'équilibrage du premier embrayage E1.

Le voile 18 d'entraînement assure donc une double fonction, de transmission de la puissance d'entrée d'une part, et de piston d'équilibrage dans le fonctionnement du premier embrayage E1, d'autre part.

Plus précisément, la fonction du piston 50 d'équilibrage du premier embrayage E1 est assurée principalement par la partie radiale interne dudit voile 18.

En variante, le piston 50 d'équilibrage et le voile 18 d'entraînement sont réalisés sous la forme de deux pièces distinctes.

La chambre 48 d'équilibrage du premier embrayage E1 est délimitée axialement par la face radiale avant du piston 50 d'équilibrage formé par la partie radialement interne du voile 18 d'entraînement et par la face radiale arrière du piston 30.

La chambre 48 d'équilibrage est alimentée en huile par l'intermédiaire du perçage 26 que comporte le premier moyeu 25A.

L'étanchéité de la chambre 48 d'équilibrage est assurée radialement à l'extérieur par des moyens 52 d'étanchéité qui sont portés par le piston 30 et qui coopèrent avec la face interne d'une partie axiale du piston 50 d'équilibrage formé par le voile 18 d'entraînement.

Le piston 30 du premier embrayage E1 s'étend radialement et elle est disposée axialement entre la chambre 32 de commande, située axialement à l'avant, et la chambre 48 d'équilibrage, située axialement à l'arrière.

Le piston 30 du premier embrayage E1 comporte, à son extrémité radiale extérieure, une partie d'actionnement formée par des doigts 54 qui s'étendent axialement vers l'arrière pour agir sur un ensemble multidisques du premier embrayage E1.

Avantageusement, le voile 18 d'entraînement comporte des ouvertures 56 pour le passage axial desdits doigts 54 formant la partie d'actionnement du piston 30 de l'embrayage E1.

Le piston 30 est commandé pour venir serrer axialement, en position embrayée, ledit ensemble multidisques du premier embrayage E1 contre des moyens 60 de réaction.

Dans le système 10 de transmission représenté aux figures 1 et 2, le premier embrayage E1 et le deuxième embrayage E2 dudit mécanisme 20 à double embrayage humide sont axialement juxtaposés, le premier embrayage E1 et le deuxième embrayage E2 étant agencés axialement de part et d'autre desdits moyens 60 de réaction.

Selon l'invention, lesdits moyens 60 de réaction comportent au moins un premier élément 58 de réaction et un deuxième élément 62 de réaction qui, respectivement associés au premier embrayage E1 et au deuxième embrayage E2, sont séparés axialement l'un de l'autre par un jeu « j ».

Avantageusement, le premier élément 58 de réaction et le deuxième élément 62 de réaction sont séparés axialement l'un de l'autre par un espace vide correspondant audit jeu « j ».

Grâce au jeu « j » axial, le premier élément 58 de réaction et le deuxième élément 62 de réaction sont libres de se déplacer axialement, indépendamment l'un de l'autre. Le déplacement axial correspond à la flexion soit du premier élément 58 de réaction, soit du deuxième élément 62 de réaction sous la charge axiale transmise par le piston 30.

Avantageusement, on supprime tout risque d'interaction entre le premier élément 58 de réaction du premier embrayage E1 et le deuxième élément 62 de réaction du deuxième embrayage E2 lors du fonctionnement du mécanisme 20.

Le premier élément 58 de réaction comporte une face 59 de réaction orientée vers l'avant en direction du premier embrayage E1 et le deuxième élément 62 de réaction comporte une face 61 de réaction orientée vers l'arrière en direction du deuxième embrayage E2.

Dans le mode de réalisation représenté sur les figures, le premier élément 58 de réaction et le deuxième 62 élément de réaction sont réalisés sous la forme d'au moins deux pièces distinctes.

Par au moins deux pièces distinctes, on entend que le premier élément 58 de réaction et le deuxième 62 élément de réaction sont des pièces indépendantes l'une de l'autre et cela au moins jusqu'à l'assemblage desdits éléments 58, 62 au sein du mécanisme 20 à double embrayage humide.

Le premier élément 58 de réaction et le deuxième élément 62 de réaction sont par exemple réalisés en tôle.

En variante non représentée, le premier élément 58 de réaction et le deuxième élément 62 de réaction sont réalisés en une seule pièce, de manière à former avant assemblage un ensemble monobloc.

Le premier élément 58 de réaction et le deuxième élément 62 de réaction, réalisés en une ou au moins deux pièces, sont liés en rotation audit au moins un moyeu du mécanisme 20.

Tel que décrit précédemment, ledit au moins un moyeu est de préférence réalisé en deux parties, respectivement le premier moyeu 25A et le deuxième 25B moyeu.

En variante non représentée, ledit au moins un moyeu est réalisé en une seule pièce, monobloc.

De préférence, le premier élément 58 de réaction et le deuxième 62 élément de réaction sont liés en rotation audit au moins un moyeu, tel qu'un moyeu commun ou deux moyeux 25A et 25B, par soudage.

En variante, le premier élément 58 de réaction et le deuxième 62 élément de réaction sont liés en rotation audit au moins un moyeu, tel qu'un moyeu commun ou deux moyeux 25A et 25B, par rivetage.

Avantageusement, ledit au moins un moyeu, en une seule pièce ou en deux parties 25A, 25B, est indépendant desdits éléments 58 et 62 de réaction de manière à pouvoir notamment être réalisé dans un matériau différent de celui employé pour les éléments 58 et 62 de réaction, selon un procédé de fabrication choisi.

En variante non représentée, le premier élément 58 de réaction est réalisé en une seule pièce avec ledit premier moyeu 25A du premier embrayage E1 et le deuxième élément 62 de réaction est réalisé en une seule pièce avec ledit deuxième moyeu 25B du deuxième embrayage E2.

Le premier élément 58 de réaction et le deuxième élément 62 de réaction comportent au moins un bossage d'appui qui, convexe s'étend axialement en direction de l'ensemble multidisques de celui desdits premier et deuxième embrayages E1, E2 auquel l'élément de réaction est associé.

Le premier élément 58 de réaction comporte au moins un bossage 63 d'appui dont la face radiale avant constitue ladite face 59 de réaction.

Le deuxième élément 62 de réaction comporte au moins un bossage 65 d'appui dont la face radiale arrière constitue ladite face 61 de réaction.

Les bossages 63 et 65 d'appui sont par exemple obtenus par emboutissage desdits éléments 58 et 62 de réaction.

De préférence, ledit au moins bossage 63 d'appui du premier élément 58 de réaction et ledit au moins un bossage 65 axial d'appui du deuxième élément 62 de réaction sont situés radialement sur un même rayon par rapport à l'axe O.

Le premier élément 58 de réaction et le deuxième élément 62 de réaction sont circonférentiellement continus, de manière à former un disque.

En variante non représentée, le premier élément 58 de réaction et le deuxième élément 62 de réaction comportent au moins une partie radiale externe circonférentiellement discontinue qui est formée d'une pluralité de bras de réaction.

Selon cette variante, l'élément 58, 62 de réaction comporte de préférence une partie radiale interne circonférentiellement continue formée par un anneau, notamment pour la liaison en rotation dudit élément de réaction avec ledit au moins un moyeu 25A, 25B le supportant.

Dans une telle variante, les bras de réaction s'étendent radialement vers l'extérieur à partir de la partie radiale interne annulaire et chaque bras de réaction est séparé du bras de réaction adjacent par une fente radiale.

Les bras de réaction selon cette variante comportent avantageusement des bossages 63 et 65 d'appui portant respectivement les faces 59 et 61 de réaction.

Avantageusement, le premier élément 58 de réaction et le deuxième élément 62 de réaction séparés axialement par le jeu « j » comportent des moyens raidisseur pour les raidir et limiter axialement le débattement du premier élément 58 de réaction et du deuxième élément 62 de réaction.

De tels moyens raidisseur sont par exemple formés par des emboutis réalisés dans le premier élément 58 de réaction et le deuxième élément 62 de réaction, radialement en dessous des bossages 63 et 65 d'appui.

Le premier embrayage E1 et le deuxième embrayage E2 dudit mécanisme 20 à double embrayage humide sont actionnés axialement en sens opposé, soit axialement de l'avant vers l'arrière contre la face 59 par le piston 30 du premier embrayage E1 et axialement de l'arrière vers l'avant contre la face 61 par celui du deuxième embrayage E2.

L'ensemble multidisques du premier embrayage E1 comporte au moins des disques 64 de friction qui sont liés en rotation audit premier arbre A1 mené par un porte-disques 66 extérieur. Le porte-disques 66 extérieur forme l'élément de sortie du premier embrayage E1.

Le porte-disques 66 extérieur comporte à la périphérie radiale extérieure une partie axiale qui est munie d'une denture 67 destinée à coopérer avec une denture 68 complémentaire que comporte chaque disque 64 de friction à sa périphérie radiale extérieure.

Le porte-disques 66 extérieur comporte des trous radiaux répartis circonférentiellement dans ladite partie axiale munie de la denture 67 et destinés à être traversés par l'huile introduite dans l'ensemble multidisques du premier embrayage E1.

Le porte-disques 66 extérieur est lié en rotation par engrènement avec les disques 64 de friction et par une liaison cannelée avec ledit premier arbre A1 mené.

Le porte-disques 66 extérieur comporte un moyeu 70 de sortie qui s'étend axialement et comporte radialement à l'intérieur des cannelures 72 axiales qui engrènent avec des cannelures 73 complémentaires du premier arbre A1 mené.

Le porte-disques 66 extérieur présente globalement une forme en « L » dont l'extrémité radiale intérieure, à l'opposé de la denture 67, est solidaire du moyeu 70 de sortie.

De préférence, le porte-disques 66 extérieur et le moyeu 70 de sortie sont fixés ensemble par soudage, en variante par rivetage.

Les disques 64 de friction comportent chacun sur leurs faces radiales axialement opposées, respectivement avant et arrière, une garniture 74 de friction.

L'ensemble multidisques du premier embrayage E1 comporte des flasques 76 qui sont munis à leur périphérie radiale interne d'une denture 78 pour les lier en rotation avec un porte-disques 80 intérieur.

Le porte-disques 80 intérieur comporte à son extrémité radiale externe une partie axiale comportant une denture 82 externe qui, complémentaire, engrène avec la denture 78 interne de chacun des flasques 76 pour les lier en rotation sans jeu.

Tel qu'illustré sur la figure 3 ou 5, le porte-disques 80 intérieur comporte des trous 81 radiaux répartis circonférentiellement dans ladite partie axiale munie de la denture 82 et destinés à être traversés par l'huile introduite dans l'ensemble multidisques du premier embrayage E1.

Les disques 64 de friction sont, unitairement, axialement interposés entre deux flasques 76 successifs. Chacune des garnitures 74 de friction d'un des disques 64 de friction coopère en position embrayée avec l'une des faces radiale des flasques 76 agencés axialement de part et d'autre, en avant et en arrière, dudit disque 64 de friction.

L'ensemble multidisques du premier embrayage E1 comporte axialement un flasque 76 à chacune de ses extrémités, respectivement un flasque 76 avant dont la face radiale avant est destinée à coopérer en position embrayée avec les doigts 54 formant la partie d'actionnement du piston 30 et un flasque 76 arrière dont la face radiale arrière est destinée à coopérer avec la face 59 de l'élément 58 de réaction des moyens 60 de réaction.

Le premier embrayage E1 comporte des moyens 84 élastiques de rappel pour rappeler automatiquement le piston 30 en position débrayée, correspondant à un état ouvert de l'embrayage.

De préférence, les moyens 84 élastiques de rappel du piston 30 sont formés par des rondelles élastiques, telles que des rondelles ondulées de type « Onduflex ™».

Les rondelles 84 élastiques sont interposées axialement entre les flasques 76 et agencées radialement à l'intérieur des disques 64 de friction, en dessous des garnitures 74 de friction. Chaque rondelle 84 élastique est axialement en appui contre la face radiale arrière d'un flasque 76 et contre la face radiale avant d'une autre flasque 76 axialement adjacent.

Les moyens 84 élastiques de rappel sollicitent axialement les flasques 76 et ce faisant facilite la libération des disques 64 de friction et le rappel du piston 30 vers la position débrayée.

En variante non représentée, les moyens 84 de rappel du piston d'un embrayage sont formés par au moins un ressort qui est par exemple agencé radialement entre l'axe O et le porte-disques 80 intérieur pour rappeler automatiquement le piston 30 vers la position débrayée.

Pour transmettre directement la puissance d'entrée, le mécanisme 20 à double embrayage humide comporte des moyens de liaison qui, pour le premier embrayage E1, lient axialement sans jeu au moins le voile 18 d'entraînement, le porte-disques 80 intérieur et les moyens 60 de réaction.

Lorsqu'en variante, le voile 18 d'entraînement et le piston 50 d'équilibrage sont réalisés en deux pièces distinctes, les moyens de liaison lient alors avantageusement également ledit piston 50 d'équilibrage axialement sans jeu avec le voile 18 d'entraînement, le porte-disques 80 intérieur et les moyens 60 de réaction.

Le piston 50 d'équilibrage du premier embrayage E1 étant formé par le voile 18 d'entraînement, le mécanisme 20 comporte une pièce en moins avec pour avantages notamment un moindre coût, une simplification et une compacité axiale accrue.

De préférence, les moyens de liaison sont réalisés par rivetage au moyen de rivets 85. En variante non représentée, les moyens de liaison sont réalisés par soudage, notamment par soudage laser par transparence.

Le voile 18 d'entraînement comporte des emboutis 86 qui, répartis circonférentiellement, font saillis axialement vers l'arrière par rapport à la face radiale arrière du voile 18 d'entraînement formant le piston 50 d'équilibrage.

Tel que représenté sur la figure 5, les emboutis 86 entourent chacun un trou 88 destiné à être traversé axialement par l'un des rivets 85 formant lesdits moyens de liaison.

De préférence, les rivets 85 formant les moyens de liaison sont communs au premier embrayage E1 et au deuxième embrayage E2 qui va maintenant être décrit.

En variante, le mécanisme 20 comporte au moins deux séries de rivets distincts pour former les moyens de liaison, des premiers rivets associés au premier embrayage E1 et des deuxièmes rivets associés au deuxième embrayage E2.

Le deuxième embrayage E2 du mécanisme 20 à double embrayage humide du système 10 de transmission est de conception similaire à celle du premier embrayage E1, le deuxième embrayage E2 étant de type multidisques.

Avantageusement, on se reportera au besoin pour la description du deuxième embrayage E2 à la description détaillée du premier embrayage E1 donnée précédemment.

Le deuxième embrayage E2 comporte un piston 90 qui est mobile axialement, ici de l'arrière vers l'avant, entre une position débrayée et une position embrayée correspondant respectivement aux états ouvert et fermé du deuxième embrayage E2 du mécanisme 20.

Le piston 30 du premier embrayage E1 et le piston 90 du deuxième embrayage E2 dudit mécanisme 20 à double embrayage humide se déplacent axialement en sens opposé pour passer par exemple de la position débrayée à la position embrayée.

Le piston 90 du deuxième embrayage E2 est commandé en déplacement au moyen d'une chambre 92 de commande délimitée axialement par une face arrière d'une partie radiale intérieure du piston 90 et par la face radiale avant d'une pièce 94 de fermeture.

La chambre 92 de commande est alimentée sélectivement en huile par le perçage 29 traversant radialement le deuxième moyeu 25B et relié à l'un des canaux 24 d'alimentation de l'arbre 22 de commande.

La pièce 94 de fermeture comporte à son extrémité radiale externe des moyens 96 d'étanchéité qui coopèrent avec une face interne d'une partie axiale du piston 90 et, à son extrémité radiale interne, des moyens 98 d'étanchéité qui coopèrent avec une surface 100 externe du deuxième moyeu 25B.

La surface 100 associée au deuxième embrayage E2 est située axialement en arrière par rapport aux moyens 60 de réaction agencés entre lesdits embrayages E1 et E2, soit axialement à l'opposé de la surface 40 associée au piston 30 du premier embrayage E1.

De préférence, la pièce 94 de fermeture est associée à une pièce 102 d'appui qui est bloquée axialement par un anneau 104 d'arrêt monté dans une gorge 105 du deuxième moyeu 25B.

Le piston 90 comporte à son extrémité radiale interne des moyens 106 d'étanchéité qui coopèrent avec la surface 100 externe du deuxième moyeu 25B, lorsque le piston 90 est déplacé axialement entre les positions débrayée et embrayée par la mise en pression de la chambre 92 de commande.

Comme la pièce 34 de fermeture pour le premier embrayage E1, la pièce 94 de fermeture est conformée, globalement entre ses extrémités radiales portant les moyens 96 et 98 d'étanchéité, pour venir axialement coopérer avec la face radiale arrière du piston 90.

La chambre 92 de commande est associée à une chambre 108 d'équilibrage délimitée par au moins un piston 110 d'équilibrage. La chambre 108 d'équilibrage est alimentée par l'un des canaux 24 d'alimentation en huile à travers le perçage 28 réalisée dans le deuxième moyeu 25B.

Par comparaison avec le piston 50 d'équilibrage du premier embrayage E1 formé par le voile 18 d'entraînement, le piston 110 d'équilibrage du deuxième embrayage E2 est une pièce distincte.

La chambre 108 d'équilibrage est délimitée axialement par la face radiale arrière du piston 110 d'équilibrage et par la face radiale avant du piston 90.

L'étanchéité de la chambre 108 d'équilibrage est assurée radialement à l'extérieur par de moyens 112 d'étanchéité qui sont portés par le piston 90 et qui coopèrent avec la face interne d'une partie axiale du piston 110 d'équilibrage.

La partie radiale interne du piston 90 s'étend radialement et elle est disposée axialement entre la chambre 92 de commande, située axialement en arrière, et la chambre 108 d'équilibrage, située axialement en avant.

Le piston 90 du deuxième embrayage E2 comporte, à son extrémité radiale extérieure, une partie d'actionnement 115 formée par un bossage qui s'étend axialement vers l'avant en direction d'un ensemble multidisques du deuxième embrayage E2.

La partie d'actionnement 115 du piston 90 du deuxième embrayage E2 est circonférentiellement continue, en variante discontinue.

La partie d'actionnement formée par les doigts 54 du piston 30 du premier embrayage E1 et la partie d'actionnement 115 du piston 90 du deuxième embrayage E2 dudit mécanisme 20 sont situées radialement sur un même rayon centré sur l'axe O du système 10.

Avantageusement, les parties d'actionnement des pistons 30 et 90 sont situées sur le même rayon centré sur l'axe O que la partie sommitale des bossages 63 et 65 d'appui formant les faces 59 et 61 de réaction.

Le piston 30 du premier embrayage E1 et le piston 90 du deuxième embrayage E2 appliquent chacun un effort de serrage sur l'ensemble multidisques qui leur est associé selon la direction axiale mais suivant un sens opposé, comme est opposée la réaction s'effectuant sur les éléments 58 et 62 de réaction.

L'ensemble multidisques du deuxième embrayage E2 comporte des disques 114 de friction qui sont liés en rotation au deuxième arbre A2 mené par un porte-disques 116 extérieur formant l'élément de sortie de l'embrayage E2.

Le porte-disques 116 extérieur comporte à la périphérie radiale extérieure une partie axiale qui est munie d'une denture 117 interne destinée à coopérer avec une denture 118 externe que comporte chacun des disques 114 de friction.

Le porte-disques 116 extérieur comporte des trous radiaux répartis circonférentiellement dans ladite partie axiale munie de la denture 117 et destinés à être traversés par l'huile introduite dans l'ensemble multidisques du deuxième embrayage E2.

Le porte-disques 116 extérieur est lié en rotation par engrènement avec les disques 114 de friction et par une liaison cannelée avec ledit deuxième arbre A2 mené.

Le porte-disques 116 extérieur comporte un moyeu 120 de sortie qui s'étend axialement et comporte radialement à l'intérieur des cannelures 122 qui engrènent avec des cannelures 123 complémentaires du deuxième arbre A2 mené.

De préférence, ledit porte-disques 116 et le moyeu 120 de sortie sont fixées ensemble par soudage, en variante par rivetage.

Les disques 114 de friction comportent chacun sur leurs faces radiales axialement opposées, respectivement avant et arrière, une garniture 124 de friction.

L'ensemble multidisques du deuxième embrayage E2 comporte des flasques 126 qui sont munis à leur périphérie radiale interne d'une denture 128 pour les lier en rotation avec un porte-disques 130 intérieur.

Le porte-disques 130 intérieur comporte à son extrémité radiale externe une partie axiale comportant une denture 132 externe qui engrène avec la denture 128 interne de chacun des flasques 126 pour les lier en rotation sans jeu.

Tel qu'illustré sur la figure 4 ou 6, le porte-disques 130 intérieur comporte des trous 131 radiaux répartis circonférentiellement dans ladite partie axiale munie de la denture 132 et destinés à être traversés par l'huile introduite dans l'ensemble multidisques du deuxième embrayage E2.

Les disques 114 de friction sont, unitairement, axialement interposés entre deux flasques 126 consécutifs.

Chacune des garnitures 124 de friction d'un des disques 114 de friction coopère en position embrayée avec une face radiale de l'un des deux flasques 126 situés axialement de part et d'autre.

L'ensemble multidisques du deuxième embrayage E2 comporte axialement un flasque 126 à chacune de ses extrémités, respectivement un flasque 126 arrière dont la face radiale arrière est destinée à coopérer, en position embrayée, avec la partie 115 d'actionnement du piston 90 et un flasque 126 avant dont la face radiale avant est destinée à coopérer avec la face 61 arrière de l'élément 62 de réaction.

Le deuxième embrayage E2 comporte des moyens 134 élastiques de rappel pour rappeler automatiquement le piston 90 en position débrayée, correspondant à un état ouvert de l'embrayage.

De préférence et comme pour le premier embrayage E1, les moyens 134 élastiques de rappel du piston 90 sont formés par des rondelles élastiques, telles que des rondelles ondulées de type « Onduflex ™».

Pour transmettre directement la puissance d'entrée, le mécanisme 20 à double embrayage humide comporte des moyens de liaison qui, pour le deuxième embrayage E2, lient axialement sans jeu au moins le piston 110 d'équilibrage, le porte-disques 130 intérieur du deuxième embrayage E2 et lesdits moyens 60 de réaction.

Avantageusement, les moyens de liaison du deuxième embrayage E2 sont réalisés par rivetage.

De préférence, lesdits moyens de liaison du deuxième embrayage E2 sont formés par des rivets 85 communs avec le premier embrayage E1 de sorte que lesdits moyens de liaison sont formés par les seuls rivets 85.

Tel que représenté sur la figure 1, les moyens de liaison du mécanisme 20 à double embrayage humide sont agencés axialement entre le piston 30 du premier embrayage E1 et le piston 90 du deuxième embrayage E2.

Les moyens de liaison lient axialement sans jeu au moins ledit voile 18 d'entraînement, le porte-disques 80 intérieur du premier embrayage E1, le porte-disques 130 intérieur du deuxième embrayage E2 et ledit au moins un moyeu portant les moyens 60 de réaction formés par les éléments 58 et 62 de réaction.

Dans ce mode de réalisation, les rivets 85 lient axialement sans jeu et en rotation le premier moyeu 25A et le deuxième moyeu 25B.

Les rivets 85 formant les moyens de liaison permettent de lier simultanément le voile 18 d'entraînement tant au premier embrayage E1 qu'au deuxième embrayage E2 du mécanisme et de transmettre directement la puissance d'entrée délivrée au système 10 par l'arbre menant.

De préférence, les moyens de liaison formés par les rivets 85 sont utilisés pour assurer la fixation du piston 50 d'équilibrage du premier embrayage E1 formé ici par le voile 18 et du piston 110 d'équilibrage du deuxième embrayage E2.

Avantageusement, lesdits moyens de liaison lient également axialement sans jeu le piston 50 d'équilibrage du premier embrayage E1 et le piston 110 d'équilibrage du deuxième embrayage E2 du mécanisme 20.

Les éléments 58 et 62 de réaction sont interposés axialement entre le porte-disques 80 intérieur du premier embrayage E1 et le porte-disques 130 intérieur du deuxième embrayage E2 pour transmettre directement la puissance d'entrée au mécanisme 20.

Comme le voile 18 d'entraînement formant le piston 50 d'équilibrage du premier embrayage E1, le piston 110 d'équilibrage du deuxième embrayage E2 comporte des emboutis 136 qui entourent chacun un trou 138 de passage d'un des rivets 85 formant les moyens de liaison.

La tête avant de chaque rivet 85 est axialement en appui contre la face radiale avant du piston 50 d'équilibrage, ici le voile 18 d'entraînement, plus précisément est reçue à l'avant dans le logement formé par l'embouti 86 autour du trou 88.

La tête avant du rivet 85 est avantageusement comprise axialement dans l'épaisseur du voile 18 d'entraînement formant le piston 50 d'équilibrage du premier embrayage E1.

Tel que représenté sur la figure 5, ledit voile 18 d'entraînement formant le piston 50 d'équilibrage du premier embrayage E1 comporte une série de trous 88 pour le passage du corps des rivets 85 tel que représenté sur la figure 7.

Le porte-disques 80 intérieur du premier embrayage E1 comporte dans sa partie radiale interne une série de trous 87 axiaux pour le passage des rivets 85.

Le premier moyeu 25A et le deuxième moyeu 25B associés aux éléments 58 et 62 de réaction comportent une série de trous 140A et 140B axiaux pour le passage des rivets 85

Tel que représenté sur la figure 6, le porte-disques 130 du deuxième embrayage E2 comporte une série de trous 137 pour le passage axial des rivets 85 et le piston 110 d'équilibrage une série de trous 138.

Tel que représenté sur la coupe de la figure 1, les rivets 85 formant les moyens de liaison lient axialement ensemble sans jeu le voile 18 d'entrainement, le porte-disques 80 intérieur du premier embrayage E1, les premier et deuxième moyeux 25A et 25B respectivement associés aux premier et deuxième embrayages E1 et E2, le porte-disques 130 intérieur du deuxième embrayage E2 et le piston 110 d'équilibrage du deuxième embrayage E2.

Lorsqu'en variante, le piston 50 d'équilibrage est une pièce distincte du voile 18 d'entraînement, le piston 50 d'équilibrage est alors avantageusement également lié axialement sans jeu par les rivets 85 afin d'être maintenu en position.

Comme la tête avant, la tête arrière de chaque rivet 85 est axialement en appui contre la face radiale arrière du piston 110 d'équilibrage, plus précisément est reçue dans un logement 145 arrière (figure 7) formé par l'embouti 136 autour du trou 138.

La tête arrière du rivet 85 est comprise axialement dans l'épaisseur du piston 110 d'équilibrage du deuxième embrayage E2.

Le corps de chaque rivet 85 traverse axialement, successivement de l'arrière vers l'avant, le trou 138 du piston 110 d'équilibrage, le trou 137 du porte-disques 130 intérieur de E2, les trous 140A et 140B des moyeux 25A et 25B, le trou 87 du porte-disques 80 intérieur de E1, le trou 88 du voile 18 formant le piston 50 d'équilibrage du premier embrayage E1.

Les moyens de liaison formés par les rivets 85 ne font cependant pas obstacle à la circulation de l'huile, radialement de l'intérieur vers l'extérieur, destinée notamment à lubrifier les garnitures 74 et 124 de friction des embrayages E1 et E2.

Tel qu'illustré sur les figures 5 et 6, les emboutis 86 du voile 18 formant le piston 50 d'équilibrage, comme les emboutis 136 du piston 110 d'équilibrage, sont circonférentiellement discontinus.

Le nombre d'emboutis 86 et 136 correspond au nombre de rivets 85 utilisés pour réaliser la liaison axiale sans jeu, par exemple ici au nombre de douze.

Tel que représenté sur la figure 2, il existe grâce aux emboutis 86 un jeu axial entre la face radiale arrière du piston 50 d'équilibrage formé par le voile 18 et la face radiale avant du porte-disques 80 intérieur permettant une circulation radiale de l'huile vers l'ensemble multidisques du premier embrayage E1.

Avantageusement, des passages d'huile sont ainsi ménagés pour permettre une circulation d'huile, radialement vers l'extérieur, au niveau des moyens de liaison formés par les rivets 85.

L'huile circule, radialement de l'intérieur vers l'extérieur suivant des flèches représentées notamment sur la figure 2, en empruntant des passages F radiaux d'huile délimités circonférentiellement par deux emboutis 86 consécutifs du voile 18 formant le piston 50 d'équilibrage du premier embrayage E1 ou deux emboutis 136 circonférentiellement consécutifs du piston 110 d'équilibrage du deuxième embrayage E2.

On a représenté sur les figures 5 et 6 à l'aide de flèches quelques-uns des passages F radiaux empruntés par l'huile entre les emboutis 86, 136 dans chacun des embrayages E1 et E2 du mécanisme 20.

Pour le premier embrayage E1, le flux d'huile traverse ensuite radialement les trous 81 du porte-disques 80 intérieur pour circuler entre les disques 74 de friction et les flasques 76 de l'ensemble multidisques de E1 avant de traverser les trous radiaux du porte-disques 66 extérieur.

Pour le deuxième embrayage E2, le flux d'huile traverse radialement les trous 131 du porte-disques 130 intérieur pour circuler entre les disques 114 de friction et les flasques 126 de l'ensemble multidisques de E2 avant de traverser les trous radiaux du porte-disques 116 extérieur.

Lorsque les moyens de liaison sont réalisés par rivetage, l'étanchéité de la chambre 48 d'équilibrage du premier embrayage E1 est assurée autour des trous 88 par contact entre une face 142 annulaire, radialement plane, qui est formée à la faveur de l'embouti 86 et entoure le trou 88.

Une fois le rivetage effectué pour lier axialement les pièces ensemble, ladite face 142 annulaire coopère avec une portion 144 de la face radiale plane entourant le trou 87 du porte-disques 80 intérieur.

On a représenté sur la figure 5, en trait pointillé autour d'un des trous 87, ladite portion 144 annulaire de la face radiale du porte-disques 80 intérieur avec laquelle est en contact l'une desdites faces 142 autour d'un des trous 88 du piston 50 d'équilibrage formé par le voile 18.

L'étanchéité de la chambre 108 d'équilibrage du deuxième embrayage E2 est assurée autour des trous 138 par contact entre une face 146 annulaire, radialement plane, qui est formée à la faveur de l'embouti 136 et entoure le trou 138.

Une fois le rivetage effectué pour lier axialement les pièces ensemble, ladite face 146 annulaire coopère avec une portion 148 de la face radiale plane entourant le trou 137 du porte-disques 130 intérieur.

On a représenté sur la figure 6, en trait pointillé autour d'un des trous 137, la portion 148 annulaire de la face radiale avec laquelle est en contact l'une desdites faces 146 entourant l'un des trous 138.

## Revendications

1. Mécanisme (20) à double embrayage humide pour un système (10) de transmission, notamment de véhicule automobile, comportant autour d'un axe (O) de rotation au moins un premier embrayage (E1) et un deuxième embrayage (E2) respectivement de type multidisques, le premier embrayage (E1) comportant au moins un premier piston (30) et le deuxième embrayage (E2) comportant au moins un deuxième piston (90) lesdits premier et deuxième pistons (30, 90) étant déplacés axialement en sens opposé pour venir, en position embrayée, serrer un ensemble multidisques contre des moyens (60) de réaction qui sont interposés axialement entre l'ensemble multidisques de chacun desdits premier et deuxième embrayages (E1, E2), lesdits moyens (60) de réaction comportent au moins un premier élément (58) de réaction et un deuxième élément (62) de réaction qui, respectivement associés au premier embrayage (E1) et au deuxième embrayage (E2), sont séparés axialement l'un de l'autre par un jeu (J),
**caractérisé en ce que** le premier élément (58) de réaction et le deuxième élément (62) de réaction, réalisés en une seule pièce ou en deux au moins pièces distinctes, sont liés en rotation à au moins un moyeu réalisé en deux parties, respectivement un premier moyeu (25A) associé au premier embrayage (E1) et un deuxième moyeu (25B) associé au deuxième embrayage (E2).

2. Mécanisme selon la revendication 1, **caractérisé en ce que** le premier élément (58) de réaction et le deuxième élément (62) de réaction comportent au moins un bossage (63, 65) d'appui qui coopère axialement avec l'un des flasques (76, 126) de l'ensemble multidisques de celui desdits embrayages (E1, E2) auquel ledit élément (58, 62) de réaction est associé.

3. Mécanisme selon la revendication 2, **caractérisé en ce que** ledit au moins bossage (63) d'appui du premier élément (58) de réaction et ledit au moins un bossage (65) d'appui du deuxième élément (62) de réaction sont situés radialement sur un même rayon par rapport à l'axe (O).

4. Mécanisme selon l'une des revendications 1 à 3, **caractérisé en ce que** le premier élément (58) de réaction et le deuxième élément (62) de réaction sont circonférentiellement continu de manière à former un disque.

5. Mécanisme selon l'une des revendications 1 à 3, **caractérisé en ce que** le premier élément (58) de réaction et le deuxième élément (62) de réaction comportent au moins une partie radiale externe circonférentiellement discontinue formée d'une pluralité de bras de réaction.

6. Mécanisme selon l'une quelconque des revendications précédentes, **caractérisé en ce que** le premier élément (58) de réaction et le deuxième élément (62) de réaction comportent des moyens raidisseur pour raidir axialement lesdits premier et deuxième éléments (58, 62) de réaction.

7. Mécanisme selon l'une quelconque des revendications précédentes, **caractérisé en ce que** le premier élément (58) de réaction et le deuxième élément (62) de réaction sont liés en rotation audit au moins un moyeu par soudage ou par rivetage.

8. Mécanisme selon l'une quelconque des revendications précédentes, **caractérisé en ce que** le premier élément (58) de réaction est réalisé en une seule pièce avec ledit premier moyeu (25A) du premier embrayage (E1) et **en ce que** le deuxième élément (62) de réaction est réalisé en une seule pièce avec ledit deuxième moyeu (25B) du deuxième embrayage (E2).

9. Mécanisme selon l'une quelconque des revendications précédentes, **caractérisé en ce que** le mécanisme (20) comporte des moyens (85) de liaison pour lier axialement sans jeu au moins le premier moyeu (25A) et le deuxième moyeu (25B).

## Patentansprüche

1. Mechanismus (20) mit Doppelnasskupplung für ein Übertragungssystem (10), insbesondere eines Kraftfahrzeugs, welcher um eine Drehachse (0) wenigstens eine erste Kupplung (E1) und eine zweite Kupplung (E2) umfasst, die jeweils vom Mehrscheibentyp sind, wobei die erste Kupplung (E1) wenigstens einen ersten Kolben (30) aufweist und die zweite Kupplung (E2) wenigstens einen zweiten Kolben (90) aufweist, wobei der erste und der zweite Kolben (30, 90) axial in entgegengesetzter Richtung bewegt werden, um in eingerückter Position eine Mehrscheibenanordnung gegen Gegendruckmittel (60) zu pressen, welche axial zwischen den Mehrscheibenanordnungen der ersten und der zweiten Kupplung (E1, E2) angeordnet sind, die Gegendruckmittel (60) ein erstes Gegendruckelement (58) und ein zweites Gegendruckelement (62) aufweisen, welche der ersten Kupplung (E1) bzw. der zweiten Kupplung (E2) zugeordnet sind und axial durch einen Zwischenraum (J) voneinander getrennt sind, **dadurch gekennzeichnet, dass** das erste Gegendruckelement (58) und das zweite Gegendruckelement (62), die aus einem Stück oder aus wenigstens zwei verschiedenen Stücken ausgebildet sind, mit wenigstens einer Nabe drehverbunden sind, die aus zwei Teilen ausgebildet ist, nämlich einer ersten Nabe (25A), die der ersten Kupplung (E1) zugeordnet ist, und einer zweiten Nabe (25B), die der zweiten Kupplung (E2) zugeordnet ist.

2. Mechanismus nach Anspruch 1, **dadurch gekennzeichnet, dass** das erste Gegendruckelement (58) und das zweite Gegendruckelement (62) wenigstens einen Abstützvorsprung (63, 65) aufweisen, der axial mit einem der Seitenstücke (76, 126) der Mehrscheibenanordnung derjenigen der Kupplungen (E1, E2) zusammenwirkt, welcher das Gegendruckelement (58, 62) zugeordnet ist.

3. Mechanismus nach Anspruch 2, **dadurch gekennzeichnet, dass** der wenigstens eine Abstützvorsprung (63) des ersten Gegendruckelements (58) und der wenigstens eine Abstützvorsprung (65) des zweiten Gegendruckelements (62) radial auf ein und demselben Radius bezüglich der Achse (0) angeordnet sind.

4. Mechanismus nach einem der Ansprüche 1 bis 3, **dadurch gekennzeichnet, dass** das erste Gegendruckelement (58) und das zweite Gegendruckelement (62) in Umfangsrichtung durchgehend sind, so dass sie eine Scheibe bilden.

5. Mechanismus nach einem der Ansprüche 1 bis 3, **dadurch gekennzeichnet, dass** das erste Gegendruckelement (58) und das zweite Gegendruckelement (62) wenigstens einen in Umfangsrichtung diskontinuierlichen äußeren radialen Teil aufweisen, der von mehreren Drehmomentstützen gebildet wird.

6. Mechanismus nach einem der vorhergehenden Ansprüche, **dadurch gekennzeichnet, dass** das erste Gegendruckelement (58) und das zweite Gegendruckelement (62) Versteifungsmittel aufweisen, um das erste und das zweite Gegendruckelement (58, 62) axial zu versteifen.

7. Mechanismus nach einem der vorhergehenden Ansprüche, **dadurch gekennzeichnet, dass** das erste Gegendruckelement (58) und das zweite Gegendruckelement (62) mit der wenigstens einen Nabe durch Schweißung oder durch Nietung drehverbunden sind.

8. Mechanismus nach einem der vorhergehenden Ansprüche, **dadurch gekennzeichnet, dass** das erste Gegendruckelement (58) mit der ersten Nabe (25A) der ersten Kupplung (E1) aus einem Stück ausgebildet ist, und dadurch, dass das zweite Gegendruckelement (62) mit der zweiten Nabe (25B) der zweiten Kupplung (E2) aus einem Stück ausgebildet ist.

9. Mechanismus nach einem der vorhergehenden Ansprüche, **dadurch gekennzeichnet, dass** der Mechanismus (20) Verbindungsmittel (85) aufweis, um wenigstens die erste Nabe (25A) und die zweite Nabe (25B) axial ohne Zwischenraum zu verbinden.

## Claims

1. Double wet clutch mechanism (20) for a transmission system (10), in particular of a motor vehicle, comprising, about an axis (0) of rotation, at least a first clutch (E1) and a second clutch (E2) respectively of the multi-disc type, the first clutch (E1) comprising at least a first piston (30) and the second clutch (E2) comprising at least a second piston (90), the said first and second pistons (30, 90) being moved axially in the opposite direction in order, in the engaged position, to clamp a multi-disc assembly against reaction means (60) which are interposed axially between the multi-disc assembly of each of the said first and second clutches (E1, E2), the said reaction means (60) comprise at least a first reaction element (58) and a second reaction element (62) which, respectively associated with the first clutch (E1) and with the second clutch (E2), are separated axially from one another by a clearance (J),
**characterized in that** the first reaction element (58) and the second reaction element (62), which are produced in a single part or in at least two separate parts, are rotationally connected to at least one hub produced in two parts, respectively a first hub (25A) associated with the first clutch (E1) and a second hub (25B) associated with the second clutch (E2).

2. Mechanism according to Claim 1, **characterized in that** the first reaction element (58) and the second reaction element (62) comprise at least one bearing boss (63, 65) which cooperates axially with one of the flanges (76, 126) of the multi-disc assembly of that one of the said clutches (E1, E2) with which the said reaction element (58, 62) is associated.

3. Mechanism according to Claim 2, **characterized in that** the said at least one bearing boss (63) of the first reaction element (58) and the said at least one bearing boss (65) of the second reaction element (62) are situated radially on one and the same radius with respect to the axis (0).

4. Mechanism according to one of Claims 1 to 3, **characterized in that** the first reaction element (58) and the second reaction element (62) are circumferentially continuous so as to form a disc.

5. Mechanism according to one of Claims 1 to 3, **characterized in that** the first reaction element (58) and the second reaction element (62) comprise at least one circumferentially discontinuous external radial part formed from a plurality of reaction arms.

6. Mechanism according to any one of the preceding claims, **characterized in that** the first reaction element (58) and the second reaction element (62) comprise stiffening means for axially stiffening the said first and second reaction elements (58, 62).

7. Mechanism according to any one of the preceding claims, **characterized in that** the first reaction element (58) and the second reaction element (62) are rotationally connected to the said at least one hub by welding or by riveting.

8. Mechanism according to any one of the preceding claims, **characterized in that** the first reaction element (58) is produced in a single part with the said first hub (25A) of the first clutch (E1), and **in that** the second reaction element (62) is produced in a single part with the said second hub (25B) of the second clutch (E2).

9. Mechanism according to any one of the preceding claims, **characterized in that** the mechanism (20) comprises connection means (85) for axially connecting, without a clearance, at least the first hub (25A) and the second hub (25B).
